# EUROPÄISCHE PATENTSCHRIFT

(11) **EP 0 760 595 B1**
(45) Veröffentlichungstag und Bekanntmachung des Hinweises auf die Patenterteilung: **26.08.1998**
(21) Anmeldenummer: 95916638.0
(22) Anmeldetag: 12.04.1995
(51) Int. Cl.: A01J 7/02

(54) **WASCHVORRICHTUNG ZUM DURCHSPÜLEN DER MELKBECHER EINES MELKZEUGES**
DEVICE FOR WASHING OUT THE TEAT CUPS OF AN AUTOMATIC-MILKING UNIT
DISPOSITIF DE LAVAGE POUR LE RINCAGE DES GOBELETS TRAYEURS D'UNE TRAYEUSE

(30) Priorität: 26.05.1994 DE 4418300
(43) Veröffentlichungstag der Anmeldung: 12.03.1997
(73) Patentinhaber: WESTFALIA SEPARATOR AG, 59302 Oelde (DE)
(72) Erfinder: BÜCKER, Heinrich, D-33449 Langenberg (DE)
(86) Internationale Anmeldenummer: EP9501353
(87) Internationale Veröffentlichungsnummer: WO9532615

(56) Entgegenhaltungen:
- WO-A-87/00396
- DE-U- 8 001 234
- US-A- 3 012 566
- US-A- 3 834 407

## Beschreibung

Die Erfindung bezieht sich auf eine Waschvorrichtung zum Durchspülen der Melkbecher eines Melkzeuges, bestehend aus einem axial verstellbaren Melkzeughalter und einer Aufnahmeeinrichtung mit Spülköpfen zum annähernd vertikalen Aufsetzen der einzelnen Melkbecher, wobei die Achsen des Melkzeughalters und der Aufnahmeeinrichtung zueinander versetzt sind und der Melkzeughalter mit einer Führungsstange versehen ist.

Eine derartige Waschvorrichtung ist beispielsweise aus der US 30 12 566 bekannt. Bei dieser Waschvorrichtung ist die Führungsstange als Zahnstange ausgebildet, die mit einem manuell betätigbaren Ritzel im Eingriff steht. Bei Melkzeugen mit unterschiedlichen Abmessungen ist eine häufige Betätigung des Ritzels erforderlich, um die richtige vertikale Position des Melkzeuges beim Spülvorgang zu gewährleisten. Wird diese Anpassung unterlassen, so besteht die Gefahr, daß die Melkbecher nicht korrekt an den Spülköpfen anliegen und der Spülvorgang dadurch beeinträchtigt wird.

Aus der DE-GM 80 01 234 ist eine Waschvorrichtung bekannt, die sowohl im Melkstand als auch direkt neben einem Spülautomaten in einem separaten Raum vorgesehen sein. Die Aufnahmeeinrichtung mit den Spülköpfen sind in horizontaler Richtung in der Wascheinrichtung fixiert und der Melkzeughalter wird in einer vorbestimmten Position arretiert. Die Melkbecher des Melkzeuges werden vertikal, mit ihren Öffnungen an den Spülköpfen anliegend in die Wascheinrichtung eingesetzt, wobei ein mit den Melkbechern über kurze Milchschläuche verbundenes Milchsammelstück oberhalb der Melkbecher in den Melkzeughalter eingehängt ist. Da der Abstand des Melkzeughalters zu den Spülköpfen voreingestellt ist, können die unvermeidbaren Maßdifferenzen der Melkzeuge zu einem Abknicken der kurzen Milchschläuche führen.
Weiterhin besteht die Gefahr, daß die Melkbecher nicht absolut senkrecht und damit plan mit ihren Öffnungen auf den Spülköpfen liegen, wodurch Leckagen entstehen können, die den Spülvorgang verschlechtern. Bei zu hoch eingestelltem Melkzeughalter kommen die Melkbecher überhaupt nicht zur Anlage an die Spülköpfe. Selbst bei einem richtig eingestellten Melkzeughalter ist die korrekte Positionierung nicht möglich, wenn das Melkzeug, wie heute üblich, mit unterschiedlich langen Melkbechern und kurzen Milchschläuchen bestückt ist.
Auch das Einsetzen und Herausnehmen der Melkbecher aus der Wascheinrichtung ist recht umständlich, da die Melkbecher in die Ausnehmungen einer Halterung eingeführt werden müssen, wodurch ein automatisches Herausnehmen der Melkbecher beispielsweise durch den beim Melken heute üblicherweise eingesetzten Arbeitszylinder mit Abzugsseil ausgeschlossen ist.

Der Erfindung liegt die Aufgabe zugrunde, die Wascheinrichtung so auszubilden, daß sich der Melkzeughalter leicht verstellen läßt.

Diese Aufgabe wird dadurch gelöst, daß die Führungsstange in einer Führungsbuchse axial frei beweglich gleitet und die Waschvorrichtung in einer Arbeitsposition fixierbar ist, in der die Achsen des Melkzeughalters und der Aufnahmeeinrichtung von der Vertikalen abweichen.

Da der Melkzeughalter in der Führungsbuchse lediglich gleitet, läßt er sich leicht auf die unterschiedlichen Dimensionen der zu spülenden Melkzeuge einstellen. Durch die Abweichung der Achsen von der Vertikalen treten in der Führungbuchse des Melkzeughalters Reibkräfte auf, die einen Teil des Gewichtes des Milchsammelstückes kompensieren und die kurzen Milchschläuche entsprechend entlasten. Durch die Wahl der Neigung der Wascheinrichtung läßt sich das günstigste Verhältnis zwischen der Kompensation der Gewichtskraft des Melkzeuges und der Restkraft, die auf die Spülköpfe wirkt, beeinflussen.

Bei einer vorteilhaften Ausgestaltung ist die Führungsstange des Melkzeughalters gegen eine Verdrehung in der Führungsbuchse arretiert. Hierdurch werden durch Verbindungsschläuche hervorgerufene Auslenkkräfte kompensiert, so daß das Melkzeug mittig zu der Aufnahmeeinrichtung fixiert bleibt.

Eine weitere vorteilhafte Ausgestaltung ist dadurch gekennzeichnet, daß die Aufnahmeeinrichtung beweglich an der Wascheinrichtung angeordnet ist, wodurch Längenunterschiede bei den einzelnen Melkbechern selbsttätig ausgeglichen werden.

Bei einer weiteren vorteilhaften Ausgestaltung sind die Spülköpfe beweglich an der Aufnahmeeinrichtung angeordnet. Auch bei nicht exakt senkrecht zur Aufnahmeeinrichtung eingesetzten Melkbechern wird dadurch eine sichere Abdichtung zwischen den Spülköpfen und den Melkbechern erreicht.

Bei einer weiteren vorteilhaften Ausgestaltung ist die Waschvorrichtung von der Arbeitsposition in eine Ruheposition schwenkbar, in der sie nicht in den Arbeitsbereich der Bedienungsperson hineinragt und diese daher nicht beim Melken behindert oder gar verletzt.

Ein Ausführungsbeispiel der Erfindung ist in der Zeichnung dargestellt und wird nachstehend näher erläutert. Es zeigt
- Fig. 1: die Wascheinrichtung in der Arbeitsposition,
- Fig. 2: die Wascheinrichtung in der Ruheposition.

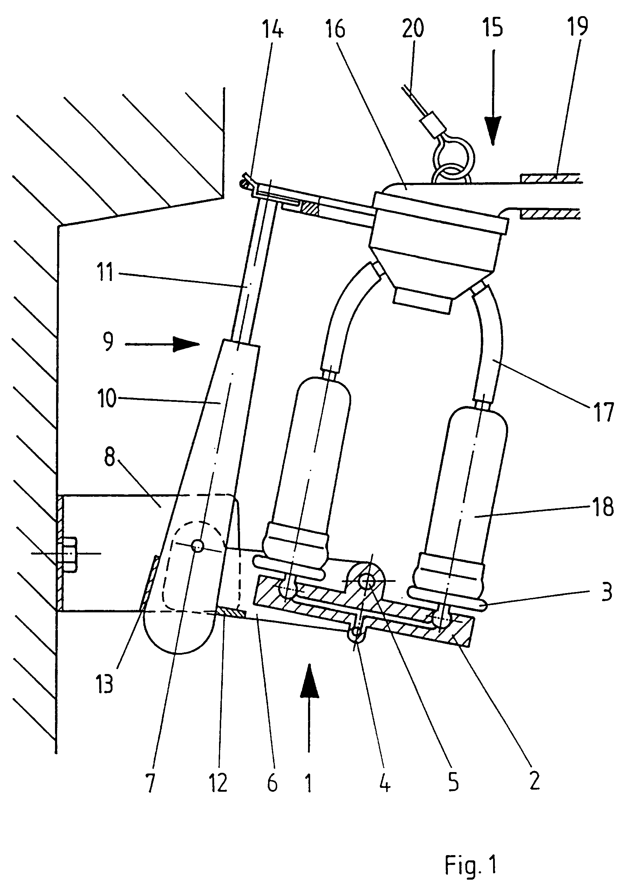

Mit 1 ist in der Fig. 1 die Waschvorrichtung bezeichnet, deren Aufnahmeeinrichtung 2 mit Spülköpfen 3 versehen ist, die mit einer Spülleitung 4 in Verbindung stehen. Die Aufnahmeeinrichtung 2 ist um einen Gelenkpunkt 5 beweglich in einem Halter 6 angeordnet, der seinerseits um einen Gelenkpunkt 7 schwenkbar ist, der an einer ortsfesten Konsole 8 vorgesehen ist. Ebenfalls um den Gelenkpunkt 7 schwenkbar ist ein Melkzeughalter 9, in dessen Führungsbuchse 10 eine Führungsstange 11 axial frei beweglich, aber gegen Verdrehen gesichert ist. Der Halter 6 und die Konsole 8 sind mit Anschlägen 12 bzw. 13 versehen, die den Halter 6 und die Führungsbuchse 10 in einer Arbeitsposition fixieren, in der die Symetrieachsen des Melkzeughalters 9 und der Aufnahmeeinrichtung 2 von der Vertikalen abweichen. Am oberen Ende der Führungsstange 11 ist eine Haltenase 14 zum Einhängen eines Melkzeuges 15 vorgesehen, dessen Milchsammelstück 16 über kurze Milchschläuche 17 mit den Melkbechern 18 verbunden ist, die mit ihren Öffnungen plan auf den Spülköpfen 3 aufliegen. Das Milchsammelstück 16 steht über einen Milchschlauch 19 mit einer nicht dargestellten Milchleitung und über ein Zugseil 20 mit einem ebenfalls nicht dargestellten Arbeitszylinder in Verbindung.

Zwecks Reinigung wird das Milchsammelstück 16 des Melkzeuges 15 in die Haltenase 14 der Führungsstange 11 des Melkzeughalters 9 eingehängt, die Führungsstange 11 soweit hochgezogen, daß die Melkbecher 18 auf die Spülköpfe 3 aufgesetzt werden können, wobei anschließend die Führungsstange 11 soweit in die Führungsbuchse 10 abgleitet, bis die Melkbecher 18 mit dem erforderlichen Druck auf den Spülköpfen 3 aufliegen. In der Führungbuchse 10 des Melkzeughalters 9 treten Reibkräfte auf, die durch die vom Gewicht des Melkzeuges 15 erzeugten Momentkräfte bewirkt werden. Durch die von der Vertikalen abweichenden Position der Symetrieachsen von Melkzeughalter 9 und Aufnahmeeinrichtung 2 werden die in der Führungsbuchse 10 auftretenden Reibkräfte noch verstärkt. Diese Reibkräfte kompensieren einen Teil des Gewichtes des Milchsammelstückes 16 und entlasten daher die kurzen Milchschläuche 17, wodurch ein Abknicken derselben vermieden wird.
Durch die Sicherung der Führungsstange 11 gegen Verdrehen in der Führungsbuchse 10 werden die durch die Verbindungsschläuche hervorgerufenen Auslenkkräfte kompensiert, so daß das Melkzeug 15 mittig zu der Aufnahmeeinrichtung 2 fixiert bleibt.
Längenunterschiede bei den einzelnen Melkbechern, die durch unterschiedlich lange oder unterschiedlich weit aufgeschobene kurze Milchschläuche 17 bzw. durch Zusammenziehen und Ausdehnen der wechselweise unter Unterdruck und Atmosphärendruck stehenden Melkbecher 18 verursacht sein können, werden selbsttätig ausgeglichen durch die beweglich an der Wascheinrichtung 1 angeordnete Aufnahmeeinrichtung 2.

Auch bei nicht exakt senkrecht zur Aufnahmeeinrichtung 2 stehenden Melkbechern 18, hervorgerufen durch die Vorspannung der Milchschläuche 17, wird eine sichere Abdichtung durch die beweglich an der Aufnahmeeinrichtung 2 angeordneten Spülköpfe 3 sichergestellt.

Nach dem in bekannter Weise durchgeführten Spülvorgang wird durch Einziehen des Zugseiles 20 das Melkzeug 15 hochgezogen, wobei sich das Milchsammelstück 16 selbsttätig aus der Haltenase 14 ausklinkt und die Führungsstange 11 selbsttätig bis auf die Führungsbuchse 10 herunterfällt.

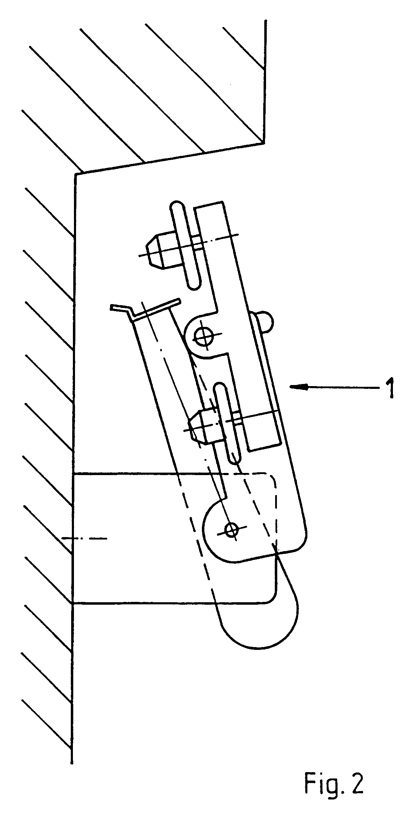

Anschließend kann die Waschvorrichtung 1 gemäß Fig. 2 von der Arbeitsposition in eine Ruheposition geschwenkt werden. In dieser Position ragt sie nicht in den Arbeitsbereich der Bedienungsperson, so daß Behinderungen oder Verletzungen beim Melken vermieden werden.

## Patentansprüche

1. Waschvorrichtung (1) zum Durchspülen der Melkbecher eines Melkzeuges (15), bestehend aus einem axial verstellbaren Melkzeughalter (9) und einer Aufnahmeeinrichtung (2) mit Spülköpfen (3) zum darauf annähernd vertikalen Aufsetzen der einzelnen Melkbecher, wobei die Achsen des Melkzeughalters (9) und der Aufnahmeeinrichtung (2) zueinander versetzt sind und der Melkzeughalter (9) mit einer Führungsstange (11) versehen ist, **dadurch gekennzeichnet**, daß die Führungsstange (11) in einer Führungsbuchse (10) axial frei beweglich gleitet und die Waschvorrichtung (1) in einer Arbeitsposition fixierbar ist, in der die Achsen des Melkzeughalters (9) und der Aufnahmeeinrichtung (2) von der Vertikalen abweichen.

2. Waschvorrichtung nach Anspruch 2, dadurch gekennzeichnet, daß die Führungsstange (11) des Melkzeughalters (9) gegen eine Verdrehung in der Führungsbuchse (10) arretiert ist.

3. Waschvorrichtung nach Anspruch 1 oder 2, dadurch gekennzeichnet, daß die Aufnahmeeinrichtung (2) beweglich an der Wascheinrichtung (1) angeordnet ist.

4. Waschvorrichtung nach einem der Ansprüche 1 bis 3, dadurch gekennzeichnet, daß die Spülköpfe (3) beweglich an der Aufnahmeeinrichtung (2) angeordnet sind.

5. Waschvorrichtung nach einem der Ansprüche 1 bis 4, dadurch gekennzeichnet, daß die Waschvorrichtung (1) von der Arbeitsposition in eine Ruheposition schwenkbar ist.

## Claims

1. Washing device (1) for rinsing the teat cups of a milking cluster (15), consisting of an axially movable milking cluster holder (9) and a receiving device (2) with rinsing heads (3) on which the individual teat cups can be practically vertically mounted, whereby the axes of the milking cluster (9) and the receiving device (2) are offset relative to one another and the milking cluster holder (9) is provided with a guide rod (11), **characterised in that** the guide rod (11) slides axially and freely in a guide bush (10) and the washing device (1) can be fixed in a working position in which the axes of the milking cluster holder (9) and the receiving device (2) deviate from the vertical.

2. Washing device according to claim 1, characterised in that the guide rod (11) of the milking cluster (9) is arrested against twisting in the guide bush (10).

3. Washing device according to claim 1 or 2, characterised in that the receiving device (2) is attached to the washing device (1) in a movable arrangement.

4. Washing device according to one of the claims 1 to 3, characterised in that the rinsing heads (3) are attached to the receiving device (2) in a movable arrangement.

5. Washing device according to one of the claims 1 to 4, characterised in that the washing device (1) can be swivelled from the working position into a resting position.

## Revendications

1. Dispositif de lavage (1) destiné au rinçage des gobelets d'un faisceau trayeur (15), constitué par un porte-faisceau (9) et un dispositif de réception (2) muni de têtes de lavage (3) sur lesquelles les gobelets sont à placer en position presque verticale, les axes du porte-faisceau (9) et du dispositif de réception (2) présentant un déport l'un envers l'autre et le porte-faisceaux (9) étant muni d'une barre de guidage (11), **caractérisé en ce que** la barre de guidage (11) coulisse librement en sens axial dans une douille de guidage (10) et le dispositif de lavage (1) pouvant être fixé dans une position de travail dans laquelle les axes du porte-faisceau (9) et du dispositif de réception (2) sont inclinés par rapport à la verticale.

2. Dispositif de lavage selon revendication 1, caractérisé en ce que la barre de guidage (11) du porte-faisceau (9) est arrêtée dans la douille de guidage (10) afin qu'il ne puisse tourner.

3. Dispositif de lavage selon revendication 1 ou 2, caractérisé en ce que le dispositif de réception (2) est disposé de manière mobile au sur le dispositif de lavage (1).

4. Dispositif de lavage selon l'une des revendications 1 à 3, caractérisé en ce que les têtes de lavage (3) sont disposées de manière mobile sur le dispositif de réception (2).

5. Dispositif de lavage selon l'une des revendications 1 à 4, caractérisé en ce que le dispositif de lavage (1) peut être orienté d'une position de travail vers une position de repos.
